# EUROPÄISCHE PATENTSCHRIFT

(11) **EP 2 035 732 B1**
(45) Veröffentlichungstag und Bekanntmachung des Hinweises auf die Patenterteilung: **06.06.2012**
(21) Anmeldenummer: 07764378.1
(22) Anmeldetag: 15.06.2007
(51) Int. Cl.: F16J 15/32

(54) **DICHTUNG UND DICHTUNGSANORDNUNG**
SEAL AND SEAL ARRANGEMENT
JOINT ET ENSEMBLE JOINT

(30) Priorität: 21.06.2006 DE 102006028467
(43) Veröffentlichungstag der Anmeldung: 18.03.2009
(73) Patentinhaber: Trelleborg Sealing Solutions Germany GmbH, 70565 Stuttgart (DE)
(72) Erfinder: KECK, Matthias, 71272 Renningen (DE)
(74) Vertreter: Kohler Schmid Möbus
(86) Internationale Anmeldenummer: PCT/DE2007/001066
(87) Internationale Veröffentlichungsnummer: WO 2007/147391

(56) Entgegenhaltungen:
- EP-A- 0 152 938
- BE-A- 632 658
- DE-A1- 4 223 671
- DE-A1- 10 154 092

## Beschreibung

Die Erfindung betrifft eine Dichtung zur Abdichtung einer Dichtfläche zwischen zwei relativ zueinander beweglichen Maschinenteilen, wobei ein Dichtkörper der Dichtung ein in einer Nut eines der Maschinenteile nutgrundseitig anzuordnendes Halteteil, einen dichtflächenseitig in der Nut anzuordnenden Dichtteil und ein nachgiebiges Verbindungsteil zwischen dem Dichtteil und dem Halteteil aufweist, wobei die Dichtung eine zwischen dem Halteteil und dem Verbindungsteil ausgebildete Einbuchtung und eine zwischen dem Verbindungsteil und dem Dichtteil ausgebildete weitere Einbuchtung aufweist, und wobei die Dichtung als Dichtring ausgebildet ist sowie eine Dichtungsanordnung, wobei die Dichtung in einer Nut eines von zwei relativ zueinander beweglichen Maschinenteilen angeordnet ist.

Derartige Dichtungen weisen eine im Querschnitt S- oder Z-förmige Grundform auf, wobei die Einbuchtungen von dieser Grundform gebildet werden. Die Dichtungen sind meist einstückig aus einem gummielastischen Material, z.B. Polyurethan oder Gummi hergestellt und als radialsymmetrischer Dichtring ausgeführt. In dieser Ausführung sind die Dichtungen als Stangen- oder Kolbendichtungen für die Abdichtung in Pneumatikanwendungen, z.B. Pneumatikzylindern oder Ventilen, und/oder als Rotationsdichtungen, z.B. in Hochdruckanwendungen, einsetzbar.

Eine derartige Dichtung wird üblicherweise zwischen zwei zueinander axial und/oder drehend bewegten Maschinenteilen in einer Nut in einer Oberfläche eines der Maschinenteile eingesetzt, wobei diese Oberfläche einer der von einer Oberfläche des zweiten Maschinenteils ausgebildeten Dichtfläche gegenüberliegend angeordnet ist. Zwischen den genannten Oberflächen befindet sich also der abzudichtende Dichtspalt. Im Falle eines Dichtrings sind die beiden Oberflächen also konzentrisch zueinander ausgerichtet. Üblicherweise ist bei einer Kolbendichtung die Nut im inneren Maschinenteil angeordnet, bei einer Stangendichtung ist die Nut im äußeren Maschinenteil angeordnet. Das nachgiebige Verbindungsteil wirkt wie eine Feder zwischen dem üblicherweise mindestens eine Dichtlippe aufweisenden Dichtteil und dem Halteteil. Das Halteteil ist derart dimensioniert, dass es einen möglichst lagefixierten Sitz der Dichtung am Nutgrund ermöglicht.

Beim Einsatz einer derartigen Dichtung z.B. in einem Pneumatikzylinder wird die Dichtung wechselseitig mit einem unter Druck stehenden Medium, d.h. einem Fluid, z.B. Öl und/oder Luft, beaufschlagt, das sich in einem Druckraum befindet. Um die gewünschte Dichtwirkung zu erzielen, wird die Dichtung mit Vorspannung in die Nut eingelegt. Dazu wird die Dichtung derart zusammengepresst, dass die Federwirkung des Verbindungsteils die dichtflächenseitige Oberfläche des Dichtteils an die Dichtfläche presst. Im Falle eines Dichtrings wird der Dichtring dazu radial zusammengepresst. Die Einbuchtungen der Dichtung dienen zu einer Druckaktivierung bei Belastung durch das Medium. Dadurch, dass das unter Druck stehende Medium in die Einbuchtungen einfließt, wird der Dichtteil zusätzlich zur Federwirkung des Verbindungsteils an die Dichtfläche gepresst. Dazu ist eine derartige Dichtung mit ihren den Nutflanken der Nut zugewandten Oberflächen (Seitenoberflächen) beabstandet zu den Nutflanken in der Nut eingelegt. Das Medium kann daher zwischen den Nutflanken und den Seitenoberflächen in die Einbuchtungen einfließen.

Die dem Dichtteil benachbarte Einbuchtung kann jedoch zu Fehlfunktionen beim Betrieb, z.B. eines Pneumatikzylinders führen. Durch die bei der Bewegung der Maschinenteile, welche mittels der Dichtung gegeneinander abgedichtet werden, auftretenden Kräfte auf die Dichtung und/oder durch die dabei auftretende wechselseitige Druckbelastung durch das Medium kann es zu einem Verkippen des Dichtteils (Abkippen) in der Nut kommen. Ist dies der Fall kann, ausgehend von einer Druckbeaufschlagung p1 an einer der Seitenoberflächen, ein Druckaufbau p2 an der Gegenseite, also an der zweiten Seitenoberfläche, zu einem Abheben der Dichtung von der Dichtfläche führen. Wenn dieses Abheben aufgetreten ist, ist keinerlei Dichtfunktion mehr gegeben. Diese Fehlfunktion wird als Überblasen der Dichtung (Blow-By) bezeichnet. Erst nach Wegnahme des Drucks an beiden Seitenoberflächen wird die Dichtfunktion der Dichtung wieder hergestellt.

Die EP 0 906 528 B1 offenbart eine gattungsgemäße Dichtung die als Dichtring ausgebildet ist, wobei bereits Vorkehrungen gegen ein Überblasen getroffen sind. Der Dichtring weist dazu radial verlaufende Druckausgleichskanäle auf, die ein Einfließen der Medien beiderseits des Dichtrings in die Einbuchtungen des Dichtringes ermöglichen. Die radialen Druckausgleichskanäle können das Abkippen des Dichtteils jedoch nicht verhindern.

Fallweise werden deshalb derartige Dichtungen auf Block gedrückt eingebaut, d.h. die Dichtungen werden derart stark, im Falle von Dichtringen radial-, zusammengedrückt, dass die Einbuchtungen vom Zwischenteil ausgefüllt werden, d.h. im eingebauten Zustand praktisch nicht mehr ihre Funktion, also das Ermöglichen einer Druckaktivierung, erfüllen können. Zwar wird so ein Abkippen des Profils der Dichtung im dynamischen Dichtbereich verhindert, jedoch ist das Funktionsverhalten der Dichtung dadurch stark beeinträchtigt und die Reibung erhöht.

Eine gattungsgemäße Dichtung ist ebenfalls aus der EP 0 152 938 A2 bekannt. Die vorbekannte Dichtung weist ein Halteteil, ein Dichtteil und ein Verbindungsteil auf, wobei zwischen Halteteil und Verbindungsteil und zwischen Dichtteil und Verbindungsteil jeweils eine Einbuchtung vorgesehen ist. Die Dichtung weist weiter vorspringende Flächenanteile auf, die an der Stirnseite des Dichtteils angeordnet sind. Die vorspringenden Flächenanteile können das Abkippen des Dichtteils nicht verhindern.

Die BE 632 658 A offenbart eine Dichtung, mit einem Dichtteil einem Halteteil und einem Verbindungsteil, wobei zwischen dem Dichtteil und dem Halteteil eine Einbuchtung ausgebildet ist. In der Einbuchtung ist ein Abstandshalteelement vorgesehen, dass Druckausgleichswege aufweist. Das Halteteil und das Dichtteil sind gegenüber dem Verbindungsteil in geringem Maße elastisch verformbar. Die Dichtung weist eine geringe Federwirkung auf.

Der Erfindung liegt die Aufgabe zugrunde, eine Dichtung und eine Dichtungsanordnung bereitzustellen, welche die Nachteile des Standes der Technik vermeiden und insbesondere das Auftreten der Fehlfunktion eines Blow-By bei guter Dichtfunktion in beliebiger Einbausituation verhindern.

Diese Aufgabe wird durch die Gegenstände der unabhängigen Patentansprüche gelöst. Die abhängigen Ansprüche stellen bevorzugte Ausführungsformen der Erfindung dar.

Eine erfindungsgemäße Dichtung zur Abdichtung einer Dichtfläche zwischen zwei relativ zueinander beweglichen Maschinenteilen weist einen Dichtungskörper mit einem in einer Nut eines der Maschinenteile nutgrundseitig anzuordnenden Halteteil, einem dichtflächenseitig in der Nut anzuordnenden Dichtteil (mit mindestens einer Dichtlippe) und einem nachgiebigen Verbindungsteil zwischen dem Dichtteil und dem Halteteil auf. Am Dichtteil kann mindestens eine Dichtlippe angeformt sein. An der Dichtung, bzw. deren Dichtungskörper, ist eine zwischen dem Halteteil und dem Verbindungsteil ausgebildete Einbuchtung und eine zwischen dem Verbindungsteil und dem Dichtteil ausgebildete weitere Einbuchtung vorhanden. Die Einbuchtungen ragen in die Abmessungen des Dichtungskörpers ein. Derart kann die Dichtung als eine Dichtung mit S- oder Z-förmiger Grundform ausgeprägt sein.

Erfindungsgemäß weist die Dichtung Abstandshalteelemente auf, wobei die Abstandshalteelemente in mindestens einer der Einbuchtungen, mindestens der zwischen dem Dichtteil und dem Verbindungsteil ausgebildeten Einbuchtung, vorgesehen sind. Die Abstandshalteelemente ragen also über die die Einbuchtungen ausbildenden Oberflächen des Dichtungskörpers radial hinaus.

Durch die Abstandshalteelemente bleibt, auch wenn die Dichtung im eingebauten Zustand zusammengepresst ist, die zugehörige Einbuchtung zumindest teilweise offen. Die am Dichtungsteil angeformten Abstandshalteelemente liegen dann, bei entsprechend starker Stauchung, mit ihrem freien Ende an der gegenüberliegenden Teiloberfläche der Einbuchtung an. Trotz dieses zusammengepressten Zustands wird also von der dichtflächennahen Einbuchtung ein Hohlraum ausgebildet, in den,bevorzugt über einen oder mehrere Verbindungskanäle, ein Medium zur Druckaktivierung des Dichtrings einströmen kann. Auf diese Weise ist eine Druckaktivierung der Dichtung auch bei starker Stauchung gewährleistet. Zusätzlich ergibt sich durch die Abstandshalteelemente eine Abstützung der Dichtung, wodurch ein Abkippen der Dichtung verhindert werden kann, so dass dem Auftreten eines Blow-By entgegen gewirkt wird. Dies ermöglicht einen störungsfreien Einsatz der erfindungsgemäßen Dichtung als Dichtung für hin- und hergehende Bewegungen oder Rotationsbewegungen.

Die erfindungsgemäße Dichtung weist mindestens einen Druckausgleichskanal auf, wobei die Druckausgleichskanäle Druckausgleichswege zwischen der Einbuchtung zwischen dem Verbindungsteil und dem Dichtteil und mindestens einer an einer Nutflanke der Nut anzuordnenden Oberfläche der Dichtung ausbilden. Die Druckausgleichskanäle sind also so angeordnet, dass mindestens in die dichtspaltseitige Einbuchtung das Medium aus einem Druckraum einströmen kann. Ein derartiger Druckausgleichskanal ermöglicht auch im zusammengepressten (Einbau-)Zustand der Dichtung das ungehinderte Einströmen des Mediums aus dem Druckraum in die Einbuchtung zur Druckaktivierung der dichtflächenseitigen Oberfläche des Dichtteils der Dichtung. Insbesondere wenn die Abstandshalteelemente im Außenbereich der Einbuchtungen, d.h. nahe an den Seitenoberflächen der Dichtung angeordnet sind, kann so ein Blockieren des Einströmens des Mediums in einen im Innenbereich der Einbuchtung liegenden Freiraum verhindert werden.

Zum Einsatz der erfindungsgemäßen Dichtung zwischen radialsymmetrischen Maschinenteilen, z.B. einer Kolben-Zylinderanordnung oder einer rotierenden Welle, ist die Dichtung als Dichtring ausgebildet. Im Falle eines in einem Zylinder bewegten Kolbens kann der Dichtteil am Dichtring radial außen angeordnet sein, so dass der Dichtring in üblicher Weise in eine Nut des Kolbens einlegbar ist. Im Falle des Einsatzes als Stangendichtung ist der Dichtteil am Dichtring bevorzugt radial innen angeordnet.

Die Druckausgleichskanäle sind konstruktiv einfach durch Unterbrechungen der Abstandshalteelemente ausgebildet.

Wenn die Abstandshalteelemente als in Längsrichtung der Einbuchtungen, d.h. bei einem Dichtring radial ausragende, kreisbogenförmig verlaufende Rippen ausgebildet sind, können die Abstandshalreelemente so ausgeformt sein, dass im Innenbereich der Einbuchtungen zusammenhängende Freiräume, d.h. bei einem Dichtring radial umlaufende Freiräume, verbleiben, in die das Medium bevorzugt über Verbindungskanäle einströmen kann. Die Druckaktivierung wirkt dadurch gleichmäßig auf der gesamten Länge der Dichtung, bzw. auf deren gesamten Umfang. Alternativ können die Abstandshalteelemente auch durch punktuelle, z.B. Kegelförmige Erhebungen ausgebildet sein.

Wenn die Dichtung mindestens einen Druckausgleichskanal zwischen der Einbuchtung zwischen dem Verbindungsteil und dem Halteteil und mindestens einer an einer Nutflanke der Nut anzuordnenden Oberfläche der Dichtung aufweist, kann auch eine Druckaktivierung des Halteteils im Nutgrund bei den vorbeschriebenen Geometrieverhältnissen gesichert werden.

In einer erfindungsgemäßen Dichtungsanordnung ist eine erfindungsgemäße Dichtung in einer Nut eines von zwei relativ zueinander beweglichen Maschinenteilen angeordnet.

Die Erfindung wird nachfolgend anhand von Ausführungsbeispielen unter Bezugnahme auf die Zeichnungen näher erläutert.

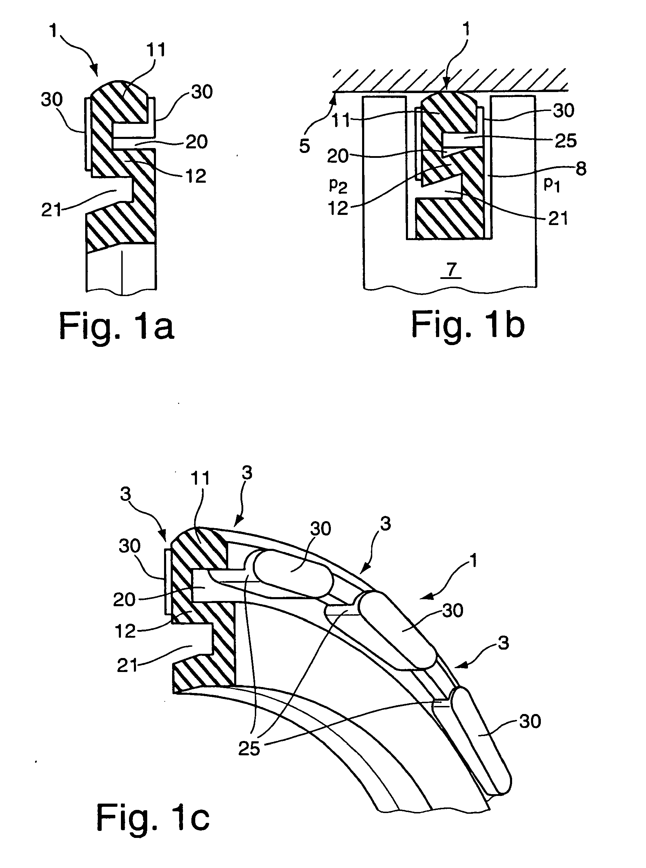

Die Figuren 1 zeigen einen erfindungsgemäßen Dichtring in verschiedenen, teilweise perspektivischen, Darstellungen.

Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

Eine erfindungsgemäße Dichtung 1 ist jeweils zur Abdichtung einer Dichtfläche 5 zwischen zwei relativ zueinander beweglichen Maschinenteilen 6,7 in eine Nut 8 in einem der Maschinenteile 7 eingelegt. Die Dichtung 1 ist bevorzugt einstückig aus einem gummielastischen Material hergestellt.

Zu beiden Seiten des zweiten Maschinenteils 7, z.B. einem Kolben in einer Pneumatikanwendung, steht jeweils ein unter einem Druck p₁, bzw. p₂, stehendes Medium an. Der Dichtungskörper weist einen nutgrundseitig angeordneten Halteteil 10, einen dichtflächenseitigen in der Nut 8 angeordneten Dichtteil 11 und einen nachgiebigen Verbindungsteil 12 zwischen dem Dichtteil 11 und dem Halteteil 10 auf. Im Dichtkörper der Dichtung 1 ist eine Einbuchtung 20 zwischen dem Halteteil 11 und dem Verbindungsteil 12 (dichtflächennahe Einbuchtung) ausgebildet. Eine weitere Einbuchtung 21 ist zwischen dem Verbindungsteil 12 und dem Dichtteil 10 (nutgrundnahe Einbuchtung) ausgebildet. Am Dichtkörper der Dichtung 1 sind Abstandshalteelemente 25 ausgebildet, die in die Einbuchtungen 20,21 einragen. Die Abstandshalteelemente 25 sind als in Längsrichtung der Einbuchtungen 20,21, d.h. bei einem Dichtring radial, verlaufende Rippen ausgebildet. In den Darstellungen der Figuren weist die der Dichtfläche 5 zugewandte Oberfläche des Dichtteils 11 eine Wölbung auf. Der durch diese Wölbung gebildete Grad bildet eine Dichtlippe aus.

Die Druckausgleichskanäle 3 bilden Druckausgleichswege zwischen den Einbuchtungen 20,21 und jeweils einer an einer Nutflanke der Nut 8 angeordneten Oberfläche der Dichtung 1, also einer Seitenoberfläche der Dichtung 1, aus.

Dadurch, dass in beiden Einbuchtungen 20,21 Druckausgleichskanäle 3 enden wird bei den dargestellten Dichtungen 1 durch eine Druckaktivierung sowohl die Dichtwirkung verbessert als auch der Sitz des Halteteils 10 am Nutgrund verbessert. Letztere Eigenschaft ist besonders günstig beim Einsatz einer erfindungsgemäßen Dichtung 1 als Rotationsdichtung.

Die Figuren 1 zeigen einen erfindungsgemäßen Dichtring 1 mit rippenartigen Erhebungen zur Ausbildung axialer und radialer Druckausgleichskanäle 3 in verschiedenen Perspektiven. Die Figur 1a zeigt eine Hälfte eines erfindungsgemäßen Dichtrings 1 vor dessen Einbau im Querschnitt, die Figur 1b zeigt eine Hälfte einer erfindungsgemäßen Dichtungsanordnung mit dem zwischen zwei gegeneinander beweglichen Maschinenteilen 6,7 in einer Nut 8 eingebauten Dichtring 1 im Querschnitt und Figur 1c zeigt einen Teil einer dreidimensionalen Darstellung des aufgeschnittenen Dichtrings 1. Die Schnittebene der Querschnittsdarstellungen ist jeweils durch einen der Druckausgleichskanäle 3 geführt. Am Dichtring 1 sind radial umlaufend Nutflankenabstandselemente 30 angeformt. Aufgrund der Radialsymmetrie des Dichtrings 1 sind auch die Einbuchtungen 20,21 radial umlaufend ausgebildet. Die an der dichtflächennahen Einbuchtung 20 vorhandenen Nutflankenabstandselemente 30 ragen als eine unterbrochene rippenartige Erhebung in die dichtflächennahe Einbuchtung 20 hinein, wodurch die Nutflankenabstandselemente 30 zugleich als Abstandshalteelemente 25 dienen. Die Nutflankenabstandselemente 30 und die Abstandshalteelemente 25 gehen also ineinander über und sind im Bereich der Oberfläche des Dichtteils 11 an der Einbuchtung 20, d.h. der dichtflächennahen Einbuchtung 20, angeordnet bzw. an den Dichtteil 11 angeformt. Die Druckausgleichskanäle 3 sind durch Unterbrechungen dieser Nutflankenabstandselemente 30 ausgebildet. Die Druckausgleichskanäle 3 verlaufen am Dichtring 1 im Bereich der als Abstandshalteelemente 25 dienenden Bereiche der Nutflankenabstandselemente 30 in der dichtflächennahen Einbuchtung 20 in axialer Richtung und verlaufen an der Seitenoberfläche des Dichtrings 1 in radialer Richtung, d.h. in Richtung vom Nutgrund zur Dichtfläche 5. Es sind also in radialer Richtung verlaufende Druckausgleichskanäle 3 mit in axialer Richtung verlaufenden Druckausgleichskanälen 3 kombiniert. In Figur 1b ist zu erkennen, dass der Dichtring 1 im eingebauten Zustand in radialer Richtung soweit zusammen gepresst ist, dass die am Dichtteil 11 angeformten Abstandshalteelemente 25 mit ihrem freien Ende an der vom Verbindungsteil 12 gebildeten Teiloberfläche der dichtflächennahen Einbuchtung 20 anliegen. Trotz dieses zusammengepressten Zustandes ist von der dichtflächennahen Einbuchtung 20 ein Hohlraum ausgebildet, in den ein Medium zur Druckaktivierung des Dichtrings 1 einströmen kann.

Vorgeschlagen wird eine Dichtung 1 zur Abdichtung einer Dichtfläche 5 zwischen zwei relativ zueinander beweglichen Maschinenteilen 6,7, wobei ein Dichtungskörper der Dichtung 1 ein in einer Nut 8 eines der Maschinenteile 7 nutgrundseitig anzuordnendes Halteteil 10, ein dichtflächenseitig in der Nut 8 anzuordnendes Dichtteil 11 und ein nachgiebiges Verbindungsteil 12 zwischen dem Dichtteil 11 und dem Halteteil 10 aufweist, und wobei die Dichtung 1 eine zwischen dem Halteteil 10 und dem Verbindungsteil 12 ausgebildete Einbuchtung 21 und eine zwischen dem Verbindungsteil 12 und dem Dichtteil 11 ausgebildete weitere Einbuchtung 20 aufweist. Die Dichtung 1 weist Abstandshalteelemente 25 auf, wobei die Abstandshalteelemente 25 in mindestens eine der Einbuchtungen 20,21, mindestens die zwischen dem Dichtteil 11 und dem Verbindungsteil 12 ausgebildete Einbuchtung 20, einragen.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen. Z.B. kann anstelle der dargestellten S-förmigen Querschnittsgrundform die erfindungsgemäße Dichtung eine Z-förmige Querschnittsgrundform aufweisen.

## Patentansprüche

1. Dichtring (1) zur Abdichtung einer Dichtfläche (5) zwischen zwei relativ zueinander beweglichen Maschinenteilen (6,7), wobei
ein Dichtungskörper des Dichtrings (1) ein in einer Nut (8) eines der Maschinenteile (7) nutgrundseitig anordenbares Halteteil (10), ein dichtflächenseitig in der Nut (8) anordenbares Dichtteil (11) und ein nachgiebiges Verbindungsteil (12) zwischen dem Dichtteil (11) und dem Halteteil (10) aufweist, wobei
der Dichtring (1) eine zwischen dem Halteteil (10) und dem Verbindungsteil (12) ausgebildete Einbuchtung (21) und eine zwischen dem Verbindungsteil (12) und dem Dichtteil (11) ausgebildete weitere dichtflächennahe Einbuchtung (20) aufweist, und wobei am Dichtring Nutflankenabstandselemente (30) radial umlaufend angeformt sind, **dadurch gekennzeichnet, dass**
der Dichtring (1) Abstandshalteelemente (25) aufweist, die in mindestens der zwischen dem Dichtteil (11) und dem Verbindungsteil (12) ausgebildeten dichtflächennahe Einbuchtung (20) vorgesehen sind, wobei an der dichtflächennahen Einbuchtung (20) vorhandene
Nutflankenabstandselemente (30) als eine unterbrochene rippenartige Erhebung in die dichtflächennahe Einbuchtung (20) des Dichtrings (1) hineinragen und als Abstandshalteelemente (25) zugleich dienen und wobei Unterbrechungen der Nutflankenabstandselemente (30) Druckausgleichskanäle (3) bilden, die in der dichtflächennahen Einbuchtung (20) in axialer und an einer Seitenoberfläche des Dichtrings (1) in radialer Richtung verlaufen.

2. Dichtring nach Anspruch 1, **dadurch gekennzeichnet, dass** die Nutflankenabstandselemente über eine gesamte axiale Erstreckung der dichtflächennahen Einbuchtung in die dichtflächennahe Einbuchtung hineinragen.

3. Dichtungsanordnung mit einem Dichtring (1) nach einem der Ansprüche 1 oder 2, und zwei relativ zweinander beweglichen Maschinenteilen (6,7) wobei der Dichtring (1) in einer Nut (8) eines von den zwei relativ zueinander beweglichen Maschinenteilen (6,7) angeordnet ist.

## Claims

1. Sealing ring (1) for sealing a sealing surface (5) between two machine parts (6, 7) that are movable relative to each other, wherein a seal body of the sealing ring (1) comprises a retaining part (10) that can be disposed on the groove bottom side in a groove (8) in one of the machine parts (7), a sealing part (11) that can be disposed in the groove (8) on the sealing surface side, and a resilient connector part (12) between the sealing part (11) and the retaining part (10), wherein
the sealing ring (1) has a recess (21) between the retaining part (10) and the connector part (12) and a further recess (20) close to the sealing surface between the connector part (12) and the sealing part (11), and wherein groove flank spacer elements (30) are formed radially around the periphery of the sealing ring, **characterized in that** the sealing ring (1) has spacer elements (25) that are provided at least in the recess (20) close to the sealing surface between the sealing part (11) and the connector part (12), wherein groove flank spacer elements (30) provided on the recess (20) close to the sealing surface project in the form of an interrupted rib-like elevation into the recess (20) of the sealing ring (1) close to the sealing surface and simultaneously act as spacer elements (25), and wherein
interruptions of the groove flank spacer elements (30) form pressure equalization ducts (3) that extend in an axial direction in the recess (20) close to the sealing surface and extend in a radial direction on a side surface of the sealing ring (1).

2. Sealing ring according to claim 1, **characterized in that** the groove flank spacer elements project into the recess close to the sealing surface over the entire axial extension of the recess close to the sealing surface.

3. Sealing arrangement comprising a sealing ring (1) according to one of the claims 1 or 2, and two machine parts (6, 7) that are movable relative to each other, wherein the sealing ring (1) is arranged in a groove (8) of one of the two machine parts (6, 7) that are movable relative to each other.

## Revendications

1. Joint d'étanchéité annulaire (1) pour étancher une surface d'étanchéité (5) entre deux éléments de machine (6, 7) mobiles l'un par rapport à l'autre,
sachant qu'un corps d'étanchéité du joint d'étanchéité annulaire (1) présente une partie de maintien (10) pouvant être disposée dans une rainure (8), du côté du fond de la rainure, de l'un (7) des éléments de machine, une partie d'étanchéité (11) pouvant être disposée dans la rainure (8) du côté de la surface d'étanchéité, et une partie de liaison souple (12) entre la partie d'étanchéité (11) et la partie de maintien (10),
sachant que le joint d'étanchéité annulaire (1) présente un évidement (21) formé entre la partie de maintien (10) et la partie de liaison (12), et un autre évidement (20) proche de la surface d'étanchéité, formé entre la partie de liaison (12) et la partie d'étanchéité (11),
et sachant que des éléments radialement périphériques (30) d'espacement de flancs de rainure sont formés sur le joint d'étanchéité annulaire,
**caractérisé en ce que** le joint d'étanchéité annulaire (1) présente des éléments (25) de maintien d'espacement, qui sont prévus au moins dans l'évidement (20) proche de la surface d'étanchéité, formé entre la partie d'étanchéité (11) et la partie de liaison (12),
sachant que les éléments (30) d'espacement de flancs de rainure présents au niveau de l'évidement (20) proche de la surface d'étanchéité s'enfoncent dans l'évidement (20), proche de la surface d'étanchéité, du joint d'étanchéité annulaire (1) sous la forme d'un bossage interrompu du genre nervure et servent en même temps d'éléments (25) de maintien d'espacement, et sachant que les interruptions des éléments (30) d'espacement de flancs de rainure forment des canaux (3) d'égalisation de pression qui s'étendent en direction axiale dans l'évidement (20) proche de la surface d'étanchéité et en direction radiale sur une face supérieure latérale du joint d'étanchéité annulaire (1).

2. Joint d'étanchéité annulaire selon la revendication 1, **caractérisé en ce que** les éléments d'espacement de flancs de rainure s'enfoncent dans l'évidement proche de la surface d'étanchéité sur toute l'étendue axiale de l'évidement proche de la surface d'étanchéité.

3. Agencement d'étanchéité avec un joint d'étanchéité annulaire (1) selon la revendication 1 ou 2 et avec deux éléments de machine (6, 7) mobiles l'un par rapport à l'autre,
sachant que le joint d'étanchéité annulaire (1) est disposé dans une rainure (8) d'un des deux éléments de machine (6, 7) mobiles l'un par rapport à l'autre.
